# EUROPÄISCHE PATENTSCHRIFT

(11) **EP 3 393 801 B1**
(45) Veröffentlichungstag und Bekanntmachung des Hinweises auf die Patenterteilung: **11.11.2020**
(21) Anmeldenummer: 16829078.1
(22) Anmeldetag: 22.12.2016
(51) Int. Cl.: B32B 37/02, B32B 33/00, B32B 37/20, G03H 1/02, B42D 25/328

(54) **VERFAHREN ZUM INTEGRIEREN EINES HOLOGRAMMS IN EINEN SICHERHEITSDOKUMENTKÖRPER**
METHOD FOR INTEGRATING A HOLOGRAM INTO THE BODY OF A SECURITY DOCUMENT
PROCÉDÉ D'INTÉGRATION D'UN HOLOGRAMME DANS UN CORPS DE DOCUMENT DE SÉCURITÉ

(30) Priorität: 22.12.2015 DE 102015226604
(43) Veröffentlichungstag der Anmeldung: 31.10.2018
(73) Patentinhaber: Bundesdruckerei GmbH, 10969 Berlin (DE); Covestro Intellectual Property GmbH & Co. KG, 51373 Leverkusen (DE)
(72) Erfinder: STASIAK, Michael, 15711 Königs Wusterhausen (DE); KNEBEL, Michael, 13086 Berlin (DE); LEOPOLD, André, 10119 Berlin (DE); KULIKOVSKA, Olga, 14165 Berlin (DE); RÖLLE, Thomas, 51381 Leverkusen (DE); HOVESTADT, Wieland, 42799 Leichlingen (DE); HÖNEL, Dennis, 53909 Zülpich-Wichterich (DE); ORSELLI, Enrico, 50677 Köln (DE)
(74) Vertreter: Patentanwälte Bressel und Partner mbB
(86) Internationale Anmeldenummer: PCT/EP2016/082460
(87) Internationale Veröffentlichungsnummer: WO 2017/109119

(56) Entgegenhaltungen:
- DE-A1-102004 012 787
- DE-A1-102007 052 951
- US-A- 6 066 378
- US-A1- 2014 340 723

## Beschreibung

Die Erfindung betrifft allgemein ein Verfahren zum Integrieren eines Hologramms in einen Sicherheitsdokumentkörper, welcher einen Laminationskörper umfasst.

Aus dem Stand der Technik sind Sicherheitsdokumente bekannt, welche Insgesamt als Laminationskörper ausgebildet sind oder einen solchen umfassen. Moderne Personalausweise, Führerscheine, Identifikationskarten, aber auch Kreditkarten und andere Dokumente sind häufig als kartenförmige Körper ausgebildet. Diese umfassen zur Absicherung häufig Hologramme. Sicherheitsdokumentkörper werden darüber hinaus auch beispielsweise als Passkarten in Reisepässe als Informationsseiten eingebunden.

Während eine Gruppe von Hologrammen, sogenannte Oberflächenhologramme oder auch als dünne Hologramme bezeichnet, beispielsweise über eine Prägung einer Oberfläche ausgebildet und hergestellt werden können, existiert eine weitere Gruppe von Hologrammen, die in einem Volumenmaterial gespeichert sind und deshalb als Volumenhologramme bezeichnet werden. Eine Speicherung dieser Volumenhologramme erfolgt in der Regel in einer Fotoschicht. Weit verbreitet sind sogenannte Volumenreflexionshologramme, die für eine Rekonstruktion des Hologramms in einer reflektierenden Geometrie vorgesehen sind. Hierbei erfolgt die Beleuchtung mit einem Rekonstruktionslicht von derselben Seite des Hologramms wie die Betrachtung des rekonstruierten Hologramms.

Ist der Sicherheitsdokumentkörper zumindest in einzelnen Bereichen transparent ausgebildet, so können auch Volumentransmissionshologramme verwendet werden.

In allen Fällen dient das Hologramm zur Absicherung des Sicherheitsdokumentkörpers gegenüber Verfälschungen und Nachahmungen sowie zur Absicherung der darin gespeicherten Information, beispielsweise von Gesichtsbildern, anderen biometrischen Daten, aber auch Informationen wie dem Namen, dem Geburtsdatum, dem Geburtsort eines Inhabers, wie dem Ausstellungsland, oder wie eine dem Sicherheitsdokument zugeordneten Dokumentnummer usw.

Als besonders vorteilhaft hat es sich erwiesen, in Sicherheitsdokumente vollflächige Hologrammschichten zu integrieren. Beispielsweise enthalten deutsche Personalausweise und die Passkarten von deutschen Reisepässen ein unter der Marke Identigram bekanntes vollflächiges Hologramm, in welches mehrere verschiedene beugungsoptische Sicherheitsmerkmale integriert sind, darunter jeweils mindestens ein Volumenreflexionshologramm.

Beim Herstellungsverfahren gemäß dem Stand der Technik werden die unterschiedlichen beugungsoptischen Sicherheitsmerkmale, beispielsweise das Volumenreflexionshologramm, in einem Hologrammfilm ausgebildet, welcher eine Trägersubstratschicht und eine darauf angeordnete Fotoschicht umfasst. Die Fotoschicht ist in der Regel als Emulsion ausgebildet, welche ein Fotopolymer umfasst. Nach der Belichtung des Hologrammfilms wird der Hologrammfilm durch Energieeinwirkung fixiert. Anschließend wird dieser unter Verwendung eines Haftmittels auf einen Laminationskörper geklebt. Der Laminationskörper ist in der Regel aus mehreren Substratschichten in einem Hochdruck-Hochtemperatur-Laminationsverfahren hergestellt. Zusätzlich wird die Fotoschicht des Hologrammfilms mit einer Schutzschicht versehen, welche im Stand der Technik als Schutzlackschicht aufgetragen wird.

Als großes Problem hinsichtlich der Sicherheit stellt allgemein die Gefahr dar, dass Fälscher einzelne Teile eines Sicherheitsdokumentkörpers entfernen, austauschen und/oder manipulieren. Hierbei besteht eine besondere Gefahr, dass die Klebeverbindung zwischen dem Hologrammfilm und dem übrigen Laminationskörper angegriffen wird, um eine Trennung des Hologrammfilms von dem übrigen Dokumentkörper zu bewirken.

Als in der Handhabung ungünstig hat sich darüber hinaus erwiesen, das Hologramm mit einer flüssig aufgebrachten Schutzschicht zu versehen, da dieses eine sehr sorgfältige Bearbeitung erforderlich macht, um eine homogene Schutzschicht auf dem bereits belichteten Hologrammfilm auszubilden.

Der Erfindung liegt die Aufgabe zugrunde, das Verfahren zur Integration eines solchen Hologramms zu verbessern, um insbesondere ein Sicherheitsdokument mit einer höheren Sicherheit gegenüber Verfälschungsmöglichkeiten zu schaffen.

### Grundidee der Erfindung

Der Erfindung liegt die Idee zugrunde, einen Hologrammfilm zum Einsatz zu bringen, der gemeinsam mit weiteren Substratschichten, die den Sicherheitsdokumentkörper bilden, in einem einzigen Laminationsschritt auszubilden und das Hologramm hierüber in den Sicherheitsdokumentkörper einzubinden. Hierdurch erhält man ein Sicherheitsdokument, bei dem der Sicherheitsdokumentkörper aus einer Trägersubstratschicht und weiteren Substratschichten als Laminationskörper ausgebildet ist, wobei mit der Trägersubstratschicht eine Fotoschicht verbunden ist, in der das Hologramm gespeichert ist. Erfindungsgemäß wird unmittelbar auf die Fotoschicht eine aushärtbare Schutzfolie vor Ausführen des Laminationsverfahrens auf den Hologrammfilm aufkaschiert.

### Definitionen

Ein Hologramm im Sinne der hier beschriebenen Erfindung ist, eine in einer Fotoschicht gespeicherte holografische Information, die mittels einer Einstrahlung von Licht geeigneter Wellenlänge und Richtung rekonstruiert werden kann. In der Fotoschicht sind Interferenzstrukturen gespeichert, die das Hologramm repräsentieren. Dieses kann beispielsweise über lokale Brechungsindexvariationen erfolgen. Auch ein belichteter Film, in dem das Hologramm gespeichert ist, wird häufig als Hologramm bezeichnet, obwohl dieses eigentlich ein Hologrammspeicher ist.

Als eine Fotoschicht wird eine Schicht bezeichnet, in die ein Hologramm über einen Belichtungsprozess einspeicherbar ist oder nach der Belichtung und der Fixierung des Hologramms gespeichert ist. Im unbelichteten Zustand kann eine solche Fotoschicht beispielsweise als Emulsion ausgebildet sein, welche ein Fotopolymer umfasst. Andere Ausführungsformen können auch eine Emulsion auf Gelatinebasis umfassen, welche Silberhalogenid umfasst.

Eine Trägersubstratschicht ist eine Substratschicht, welche mechanisch selbsttragend ist und auf welcher die Fotoschicht aufgebracht ist.

Ein Hologrammfilm ist ein filmartiges Material, welches eine Trägersubstratschicht und eine darauf aufgebrachte Fotoschicht umfasst.

Um eine Beschädigung des Hologrammfilms, insbesondere der Fotoschicht, vor und während der Verarbeitung des Hologrammfilms, zu vermeiden, kann der Hologrammfilm mit einer Hologrammfilmschutzfolie versehen sein, welche auf der von der Trägersubstratschicht abgewandten Seite der Fotoschicht angeordnet ist. Im Sinne der hier beschriebenen Vorgänge gehört die Hologrammschutzschicht nicht zum Hologrammfilm, auch wenn der Hologrammfilm mit der Hologrammschutzschicht versehen als ein einheitliches Halbzeug, beispielsweise als Rollenware oder als Bogenware, bereitgestellt wird.

Eine aushärtbare Schutzschicht ist eine flächig ausgebildete Schicht, welche durch Energieeintrag hinsichtlich ihrer chemischen und/oder physikalischen Struktur so verändert werden kann, dass diese eine größere Festigkeit nach dem Energieeintrag aufweist. Insbesondere umfasst eine solche Schicht Prepolymere, Monomere und/oder Oligomere oder Polymere, welche durch eine Energieeinwirkung zu einer höheren Polymerisationsstufe und/oder Vernetzung derselben veranlasst werden.

Als eine in einem Sicherheitsdokumentkörper vollflächig ausgebildete Schicht oder als ein vollflächig ausgebildeter Film oder als ein vollflächig ausgebildeter Hologrammfilm werden jeweils eine Schicht oder ein Film oder ein Hologrammfilm angesehen, welche sich über die gesamte Fläche des Sicherheitsdokumentkörpers erstreckt. Im Rahmen der Herstellung werden Schichten und Filme als vollflächig angesehen, wenn diese eine flächige Ausdehnung aufweisen, welche mindestens der flächigen Ausdehnung des herzustellenden Sicherheitsdokumentkörpers entspricht. Bei einem kartenförmigen Sicherheitsdokumentkörper ist die größte Oberfläche, jene Fläche die zur Beurteilung dieses Merkmals herangezogen wird, oder jene Fläche senkrecht zu der Richtung, in der die Schichten, d.h. die Substratschichten und ein Film bzw. ein Hologrammfilm, flächig übereinander angeordnet und zu dem Sicherheitsdokumentkörper laminiert werden oder laminiert sind.

### Bevorzugte Ausführungsformen

Vorgeschlagen wird ein Verfahren zum Integrieren eines Hologramms in einen Sicherheitsdokumentkörper, welcher einen Laminationskörper umfasst, umfassend die Schritte: Bereitstellen eines Hologrammfilms mit einer Trägersubstratschicht und einer Fotoschicht; Bereitstellen weiterer Substratschichten; Ausführen einer Lamination zum Ausbilden des Laminationskörpers, wobei vorgesehen ist, dass der Hologrammfilm gemeinsam mit den weiteren Substratschichten zu einem Substratschichtenstapel zusammengetragen wird und gemeinsam mit den weiteren Substratschichten während des Ausführens der Lamination zu dem Laminationskörper zusammengefügt wird. Hierdurch wird eine sehr gute Anhaftung des Hologrammfilms an die weiteren Substratschichten erreicht. Ferner wird das Herstellungsverfahren vereinfacht. Insbesondere entfällt die Handhabung eines Haftmittels, wie es bisher im Stand der Technik verwendet wurde. Erfindungsgemäß wird unmittelbar auf die Fotoschicht eine aushärtbare Schutzfolie vor Ausführen des Laminationsverfahrens auf den Hologrammfilm aufkaschiert.

Man erhält somit einen Sicherheitsdokumentkörper mit einem Hologramm, wobei der Sicherheitsdokumentkörper aus einer Mehrzahl von flächig aneinander angrenzenden Substratschichten und einer Fotoschicht, in der das Hologramm gespeichert ist, gebildet ist, wobei die Fotoschicht auf einer Seite mit einer Trägersubstratschicht verbunden ist, welche eine äußere der Mehrzahl der aneinander grenzenden Substratschichten ist, wobei die Mehrzahl der Substratschichten einschließlich der Trägersubstratschicht, mit der die Fotoschicht verbunden ist, über ein Laminationsverfahren zu einem Laminationskörper verbunden sind, wobei der Laminationskörper eine vor dem Ausführen des Laminationsverfahrens unmittelbar auf die Fotoschicht des Hologrammfilms aufkaschierte aushärtbare oder ausgehärtete Schutzfolie umfasst.

Besonders bevorzugt sind die Substratschichten und der Hologrammfilm vollflächig ausgebildet. Besonders bevorzugt weisen die Substratschichten und der Hologrammfilm dieselben lateralen Abmessungen auf. Dieses erleichtert eine Handhandhabung der Substratschichten und des Hologrammfilms als auch die Lamination. Es wird eine vollflächige Verbindung zwischen dem Hologrammfilm und der angrenzenden Substratschicht ermöglicht.
Besonders bevorzugt wird die Lamination in einem Hochtemperatur-Hochdrucklaminationsverfahren ausgeführt. Als Hochtemperatur-Hochdrucklaminationsverfahren werden Laminationsverfahren angesehen, bei denen die Temperatur in dem Substratschichtenstapel so erhöht wird, dass die Glastemperatur/Schmelztemperatur mindestens einer der aneinander angrenzenden Substratschichten im Innern des Substratschichtenstapels erreicht wird. Vorzugsweise wird das Laminationsverfahren bei einer Temperatur durchgeführt, die oberhalb der Glastemperatur sämtlicher der Mehrzahl der Substratschichten einschließlich der Trägersubstratschicht liegt.

Um die Fotoschicht, in der das Hologramm gespeichert ist, in einem fertigen Sicherheitsdokument bzw. dem Sicherheitsdokumentkörper zu schützen, ist bei einer Ausführungsform vorgesehen, dass unmittelbar auf die Fotoschicht eine aushärtbare Schutzfolie aufkaschiert wird. Eine solche aushärtbare Schutzschicht kann während des Aushärtens zuverlässig mit der Fotoschicht des Hologrammfilms verbunden werden.

Das Laminationsverfahren wird als ein Laminationsschritt ausgeführt, welches bedeutet, dass alle miteinander laminierten Schichten zeitgleich miteinander Verbunden werden.

Ein besonders guter Schutz gegen eine Delamination oder Auftrennung des Dokumentkörpers kann dadurch erreicht werden, dass die Mehrzahl der Substratschichten einschließlich der Trägersubstratschicht alle auf Basis desselben Kunststoffmaterials hergestellt sind oder werden. Bei einer solchen Ausführungsform ist es möglich, dass die Mehrzahl der Substratschichten einschließlich der Trägersubstratschicht so miteinander verbunden sind, dass zwischen den Materialschichten, die mit der Mehrzahl der Substratschichten in dem fertigen Sicherheitsdokumentkörper korrespondieren, aus denen der Sicherheitsdokumentkörper hergestellt ist, keine Phasenübergänge im Hinblick auf die Polymerstruktur in dem Kunststoffmaterial feststellbar sind. Es entsteht somit im Hinblick auf die Polymerstruktur ein monolithischer Sicherheitsdokumentkörper. Es versteht sich, dass an der Grenze zwischen der Trägersubstratschicht und der Fotoschicht bzw. an der Grenzfläche zwischen Fotoschicht und ausgehärteter oder aushärtbarer Schutzfolie jeweils ein Phasenübergang auch hinsichtlich der Kunststoff- oder Polymerstruktur feststellbar ist. Darüber hinaus sind Übergänge zwischen den Materialschichten in dem Sicherheitsdokumentkörper erkennbar, die durch Beimengungen zum Verfärben oder Bedruckungen oder Ähnliches verursacht sind. Hinsichtlich der Polymerstruktur ist jedoch in einem solchen Dokumentkörper nach dem Laminationsvorgang kein Phasenübergang zwischen den weiteren Substratschichten und der Trägersubstratschicht erkennbar.

Eine sehr gute und nicht zerstörungsfrei zu lösende Verbindung wird zwischen den Substartschichten und dem Hologrammfilm auch ohne Verwendung eines Haftvermittlers oder Ähnlichen erreicht.

Vorzugsweise sind die weiteren Substratschichten und die Trägersubstratschicht des Hologrammfilms alle als Polycarbonat-Schichten ausgebildet. Hierdurch erhält man besonders stabile und langlebige Sicherheitsdokumentkörper.

Bei einer Ausführungsform wird der Hologrammfilm belichtet, aber noch nicht fixiert bereitgestellt. In einem solchen Fall kann die aushärtbare Schutzfolie auf dem Hologrammfilm vor dem Laminieren aufkaschiert werden. Vorzugsweise findet bei einer solchen Ausführungsform das Aushärten sowie Fixieren des Hologramms in dem Hologrammfilm zeitgleich über ein Zuführen von Energie statt. Besonders bevorzugt wird das Aushärten und Fixieren über ein Einstrahlen von ultraviolettem Licht bewirkt.

Bei einer weiteren Ausführungsform wird die aushärtbare Schutzfolie auf den bereits belichteten und fixierten Hologrammfilm vor der Lamination aufkaschiert. Die Aushärtung erfolgt besonders bevorzugt über ein Einstrahlen von ultraviolettem Licht. Die Lamination erfolgt nach der Härtung der Schutzfolie.

Bei einer anderen Ausführungsform finden das Aufkaschieren der aushärtbaren Schutzfolie und das anschließende Aushärten erst statt, nachdem der Hologrammfilm mit den weiteren Substratschichten in dem Laminationsverfahren zu dem Laminationskörper zusammengefügt ist. So können Materialien für die aushärtbare Schutzfolie verwendet werden, die mit einem Laminationsprozess nicht kompatibel sind, beispielsweise nicht ausreichend hitzebeständig sind.

Als Schutzfolie kann beispielsweise eine unter der Bezeichnung "Bayfol OX 500" von der Covestro AG, vertriebene Folie verwendet werden.

Bei wieder einer anderen Ausführungsform ird die aushärtbare Schutzfolie während des Laminationsschrittes bzw. während des Laminationsverfahrens ausgehärtet.

Um die Fotoschicht des Hologrammfilms zu schützen, wird der Hologrammfilm in der Regel mit einer Hologrammfilmschutzfolie bereitgestellt, die die Fotoschicht des Hologrammfilms abdeckt. Diese wird vor dem Aufkaschieren der Schutzfolie entfernt.

Um besonders dünne Schutzfolien verwenden zu können und dennoch eine einfache mechanische Handhabung zu gewährleisten, wird die aushärtbare Schutzfolie bei einigen Ausführungsformen mit einer Trägerfolie bereitgestellt. Zusätzlich kann auch die aushärtbare Schutzfolie noch eine weitere Abdeckfolie auf der von der Trägerfolie abgewandten Seite aufweisen. Diese Abdeckfolie wird ähnlich wie die Hologrammfilmschutzfolie vor dem Aufkaschieren der Schutzfolie auf die Fotoschicht entfernt. Die Trägerfolie kann hingegen auf der aushärtbaren Schutzfolie, auch wenn diese bereits vor einem Laminationsschritt ausgehärtet ist, während des Laminationsschritts verbleiben und erst anschließend von dem fertigen Sicherheitsdokumentkörper entfernt werden.

Bei einem fertigen Sicherheitsdokumentkörper ist somit auf der von der Trägersubstratschicht abgewandten Seite der Fotoschicht eine nach dem Aufkaschieren ausgehärtete Schutzfolie angeordnet. Typische Schichtdicken für die ausgehärtete Schutzfolie liegen im Bereich zwischen 1 und 30 µm, besonders bevorzugt im Bereich zwischen 3 und 15 µm, am bevorzugtesten beträgt eine solche Schichtdicke etwa 5 µm.

Eine Schichtdicke der Fotoschicht liegt vorzugsweise ebenfalls im Bereich zwischen 5 und 20 µm, besonders bevorzugt beträgt die Dicke etwa 10 µm. Besonders bevorzugt ist in die Fotoschicht ein Volumenreflexionshologramm einbelichtet, welches besonders bevorzugt als individualisierte Kontaktkopie von einem Hologrammmaster hergestellt wird bzw. ist. Die Individualisierung erfolgt über eine räumliche Modulation des zum Kopieren verwendeten Lichts.

Bei einer weiteren Ausführungsform erfolgt das Aufkaschieren der aushärtbaren Schutzfolie unmittelbar auf die Fotoschicht des Hologrammfilms vor dem Belichten des Hologrammfilms, mit dem das Hologramm in die Filmschicht belichtet wird. Anschließend kann das aus dem belichteten Hologrammfilm mit der darauf angeordneten Schutzfolie bestehende Halbzeug über eine UV-Einstrahlung zeitgleich ausgehärtet und fixiert werden. Dieses Halbzeug wird dann in dem Laminationsschritt mit den weiteren Substratschichten zu dem Sicherheitsdokumentkörper verbunden.

Nachfolgend wird die Erfindung unter Bezugnahme auf eine Zeichnung näher erläutert. Hierbei zeigen:
- Fig. 1: eine schematische Darstellung zur Erläuterung der Herstellung eines Sicherheitsdokumentkörpers;
- Fig. 2: eine weitere schematische Darstellung zur Erläuterung der Herstellung eines Sicherheitsdokumentkörpers und
- Fig. 3: eine schematische Schnittdarstellung durch einen Sicherheitsdokumentkörper.

Gleiche technische Merkmale sind in allen Figuren mit denselben Bezugszeichen versehen.

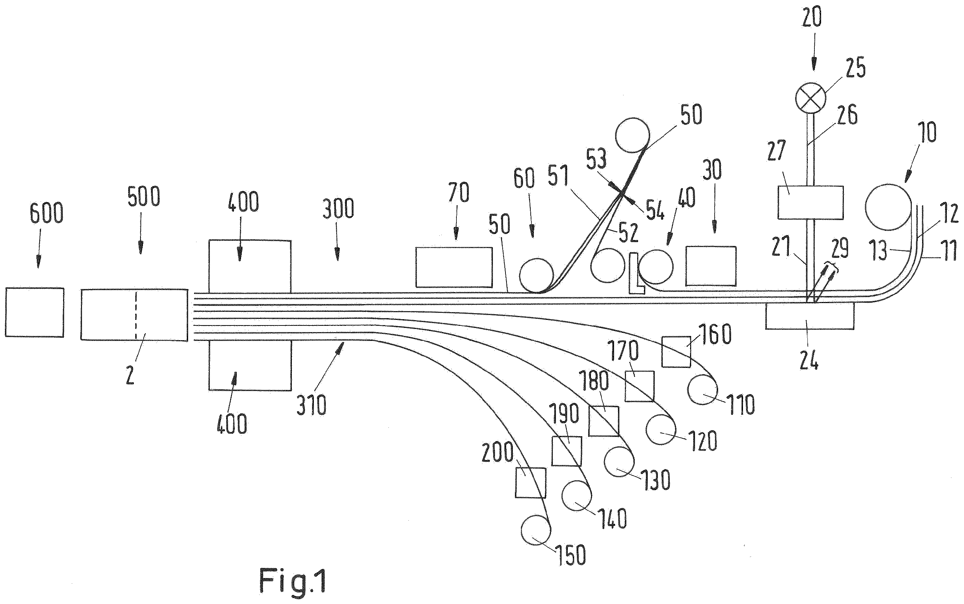

In Fig. 1 ist schematisch die Herstellung eines Sicherheitsdokumentkörpers 1 dargestellt. Zunächst wird ein Hologrammfilm 10 beispielsweise als Rollenmaterial bereitgestellt. Dieser Hologrammfilm 10 umfasst eine Trägersubstratschicht 11 und eine darauf aufgebrachte Fotoschicht 12. Der Hologrammfilm 10 ist zusätzlich mit einer Hologrammfilmschutzfolie 13 verbunden, die die Fotoschicht 12 vor Beschädigungen während der Verarbeitung schützt.

Der Hologrammfilm 10 wird in eine Kontaktkopierstation 20 geführt. In dieser wird der Hologrammfilm 10 in Kontakt mit einem Hologrammmaster 24 angeordnet. Ein Laser 25 erzeugt kohärentes Licht 26, welches durch einen räumlichen Lichtmodulator (Spatial Light Modulator) 27 geführt wird. Hierdurch wird das kohärente Licht 26 räumlich moduliert. Das so modulierte kohärente Licht 28 dringt durch den Hologrammfilm 10 hindurch auf den Hologrammmaster 24 und wird an diesen gebeugt, wobei ein Hologramm des Hologrammmasters 24 an unterschiedlichen Positionen mit Licht unterschiedlicher Intensität rekonstruiert wird. Das gebeugte Licht 29 interferiert mit dem vom Special Light Modulator eingestrahlten modulierten kohärenten Licht 28 in der Fotoschicht 12 und speichert so eine individualisierte Kopie des Hologramms des Hologrammmasters 24 in den Hologrammfilm 10.

Der belichtete Hologrammfilm 10 wird anschließend optional in einer Fixierstation 30 fixiert. Wie weiter unten erläutert wird, kann das Fixieren auch zu einem anderen Zeitpunkt in einer anderen Station stattfinden.

Bei der dargestellten Ausführungsform wird in einer Trennstation 40 die Hologrammfilmschutzfolie 13 von dem Hologrammfilm entfernt. Ferner wird eine aushärtbare Schutzfolie 50 beispielsweise als Rollenmaterial bereitgestellt. Die Schutzfolie 50 ist auf einer Seite 53 mit einer Trägerfolie 51 und auf einer gegenüberliegenden Seite 54 mit einer Abdeckfolie 52 versehen. Die Abdeckfolie 52 wird in einer Abtrennstation 55 von der aushärtbaren Schutzfolie 50 entfernt. In einer Kaschierstation 60 wird unmittelbar auf die Fotoschicht 12 des Hologrammfilms 10 die aushärtbare Schutzfolie 50 aufkaschiert, die in der Regel noch mit der Trägerfolie 51 verbunden ist. Ist die aushärtbare Abdeckfolie mechanisch selbsttragend, kann die Trägerfolie 51 fehlen.

In einer Aushärt-/Fixierstation 70 wird anschließend die aushärtbare Schutzfolie 50ausgehärtet und hierbei mit der Fotoschicht 12 des Hologrammfilms 10 fest verbunden. Ist der belichtete Hologrammfilm 10 nicht in der Fixierstation 30 fixiert worden, so kann das Fixieren des belichteten Hologramms zeitglich mit dem Aushärten in der Aushärt- und Fixierstation 70 erfolgen.

Für die Herstellung des Sicherheitsdokumentkörpers 1 werden zusätzlich weitere Substratschichten 110, 120, 130, 140, 150 bereitgestellt. In der dargestellten Ausführungsform werden die weiteren Substratschichten 110-150 jeweils als Rollenmaterial bereitgestellt. In Bearbeitungsstationen 160, 170, 180, 190, 200 können die weiteren Substratschichten 110-150 individuell bearbeitet werden, beispielsweise durch ein Bedrucken, durch ein Ausstanzen von Teilflächen, durch ein Prägen, durch ein Aufbringen und/oder Einbringen von weiteren Elementen (Chips, Patches, ...) etc. Die so vorbearbeiteten weiteren Substratschichten 110-150 werden gemeinsam mit dem Hologrammfilm 10 und der darauf aufgebrachten Schutzfolie 50 in einer Zusammentragestation 300 zu einem Substratschichtenstapel 310 zusammengetragen. Hierbei grenzt die Trägersubstratschicht 11 an eine der weiteren Substratschichten 110-150 an und bildet die äußere dieser Substratschichten 110-150, 11. Der Hologrammfilm 10 und die Substratschichten 110-150 überlagern einander vollflächig, d.h zumindest in einem Bereich, dessen flächige Ausdehnung mindestens einer flächigen Ausdehnung eines herzustellenden Sicherheitsdokumentkörpers entspricht. In einer Laminierstation 400 wird anschließend eine Lamination durch Einbringen von Wärme und Ausüben eines Drucks ausgeführt. Hierbei werden die weiteren Substratschichten 110-150 und die Trägersubstratschicht 11 jeweils alle miteinander flächig verbunden. Es entsteht ein Laminationskörper 2. Die Verbindung wird ohne Verwendung eines Haftvermittlers ausgebildet.

In einer Beschneide- und/oder Vereinzelungseinrichtung 500 werden aus dem gebildeten Laminationskörper 2 einzelne Sicherheitsdokumentkörper 1 vereinzelt und beschnitten. In einer anschließenden Weiterverarbeitungsstation 600 können weitere Nachbearbeitungsschritte ausgeführt werden, beispielsweise eine Individualisierung über eine Lasermarkierung, eine elektronische Markierung über ein Einspeichern von Daten in einen zwischen die Substratschicht eingefügten Mikrochip etc. ausgeführt werden. Ferner kann die Trägerfolie 51, die mit der Abdeckfolie bereitgestellt wurde, entfernt werden. Dieses Entfernen kann auch bereits vor oder während der Vereinzelung und des Beschneidens stattfinden. Als Schutzschicht kann diese jedoch auch bis zu einer Auslieferung oder Weiterverarbeitung des Sicherheitsdokumentkörpers 1 auf diesem verbleiben.

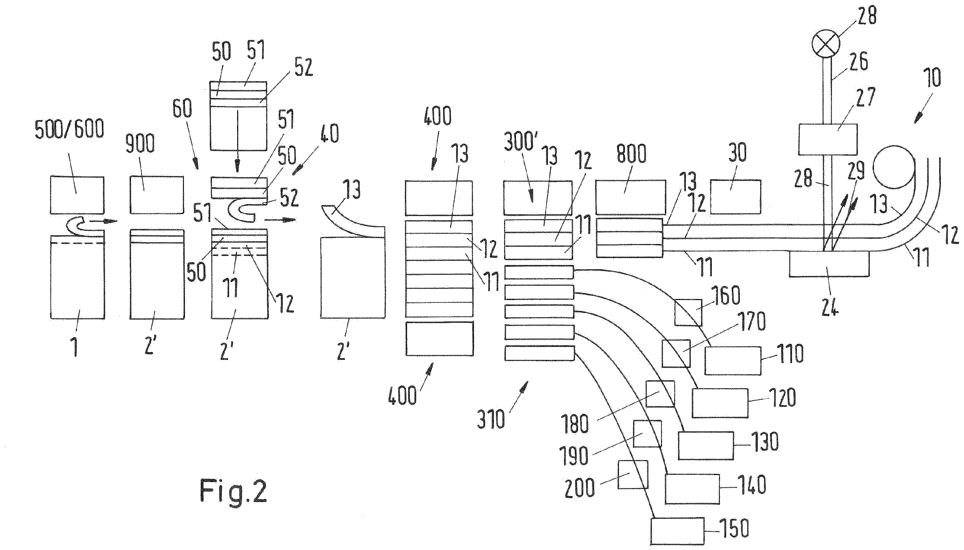

In Fig. 2 ist eine Modifikation der Herstellung eines Sicherheitsdokumentkörpers 1 gezeigt. Das dargestellte Verfahren unterscheidet sich im Wesentlichen dadurch, dass die weiteren Substratschichten 110-150 als Bögen bereitgestellt werden. Entsprechend wird der Hologrammfilm 10 in einer Vereinzelungseinrichtung 800 in Bögen unterteilt und in der Zusammentragestation 300' Bögen der weiteren Substratschichten 110-150 sowie der Bogen des Hologrammfilms 10 mit der Trägersubstratschicht 11 zusammengetragen. Bei dieser Ausführungsform ist die Hologrammfilmschutzfolie 13 noch auf der Fotoschicht angeordnet und die aushärtbare Schutzfolie 50 noch nicht auf den Hologrammfilm 10 kaschiert. Die einzelnen Bögen weisen vorzugsweise alle dieselben flächigen Abmessungen auf. Die Bögen überlagern einander in einem Bereich vollflächig, welcher in seinen Abmessungen mindestens den Abmessungen eines herzustellenden Sicherheitsdokumentkörpers entspricht.

Die Lamination findet somit in der Laminierstation 400 ohne die Schutzfolie 50 statt. Von dem entstandenen Laminationskörper 2' wird anschließend die Hologrammfilmschutzfolie 13 entfernt und die Schutzfolie 50, von der eine eventuell vorhandene Abdeckfolie 52 entfernt ist, aufkaschiert und anschließend in einer Aushärtstation 900 ausgehärtet. Anschließend findet erneut ein eventuelles Vereinzeln und/oder Beschneiden sowie eine Nachbearbeitung statt, wie es oben im Zusammenhang mit Fig. 1 erläutert ist. Ebenso kann die Trägerfolie 51 entfernt werden.

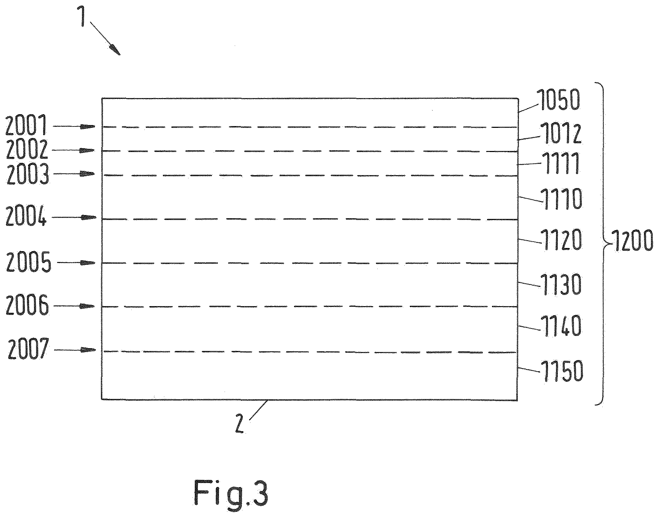

In Fig. 3 ist schematisch ein Querschnitt durch einen fertigen Sicherheitsdokumentkörper 1 dargestellt. Über gestrichelte Linien sind die Übergange 2001- 2006 der Materialschichten 1050,1012,1011, 1110 -1115 in dem Laminationskörper angedeutet, die mit Grenzflächen der Substratschichten 50, 12,11, 110-150 zusammenfallen, aus denen der Laminationskörper gebildet ist. Die entsprechenden Materialschichten sind mit Bezugszeichen gekennzeichnet, die um eintausend größer sind als die Bezugszeichen der Substratschichten und Folien aus denen die materialschichten gebildet sind.

Über den aus den weiteren Substratschichten 110-150 gebildeten Materialschichten 1110-1150 ist eine Materialschicht 1011 angeordnet, die mit der Trägersubstratschicht 11 des Hologrammfilms 10 korrespondiert. Darüber befindet sich die Fotoschicht 1012 mit dem darin belichteten Hologramm sowie die darauf aufkaschierte und ausgehärtete Abdeckschicht 1050.

Sind die Trägersubstratschicht 11 sowie die weiteren Substratschichten 110-150 alle auf Basis desselben Polymermaterials hergestellt, so ergibt sich ein monolithischer Materialblock 1200, in dem hinsichtlich der Polymerstruktur keine Phasenübergänge an den Übergängen 2003-2007 der eingezeichneten Materialschichtgrenzen 1011,1110-1150 zu erkennen sind, welche mit den ursprünglichen Substratschichtgrenzen vor der Lamination zusammenfallen. Auf diesem monolithischen Materialkörper 1200 ist die Fotoschicht 1012 mit der darauf aufkaschierten Schutzfolie 1050 angeordnet. Man erhält so einen gegenüber Delaminationsversuchen gut geschützten Sicherheitsdokumentkörper 1. Dieser kann beispielsweise als Personalausweis, Identitätskarte, Passkarte, Führerschein oder Ähnliches genutzt werden. Wird eine Auftrennung zwischen dem monolithischen Materialkörper 1200 und der Fotoschicht 1012 mit dem darin gespeicherten Hologramm versucht, so führt dies zu einer Beschädigung der Hologrammschicht, d.h. der Fotoschicht1012, sodass dieses nicht weiter verwendet werden kann. Ein Austausch des Hologramms und Aufbringen des Hologramms auf einen anderen monolithischen Materialkörper zu Fälschungszwecken ist somit nicht möglich.

### Bezugszeichenliste

- 1: Sicherheitsdokumentkörper
- 2: Laminationskörper
- 10: Hologrammfilm
- 11: Trägersubstratschicht
- 12: Fotoschicht
- 13: Hologrammfilmschutzfolie
- 20: Kontaktkopierstation
- 24: Hologrammmaster
- 25: Laser
- 26: kohärentes Licht
- 27: räumlicher Lichtmodulator (SLM)
- 28: individuell moduliertes kohärentes Licht
- 29: gebeugtes (rekonstruiertes) Licht
- 30: Fixierstation
- 40: Trennstation
- 50: Schutzfolie
- 51: Trägerfolie
- 52: Abdeckfolie
- 60: Kaschierstation
- 70: Aushärt-/Fixierstation
- 110, 120, 130, 140, 150: weitere Substratschichten
- 160, 170, 180, 190, 200: Bearbeitungsstationen (Drucken, Stanzen/Prägen, Einfügen von Elementen, z.B. Chip, etc.)
- 300, 300': Zusammentragestation
- 310: Substratschichtenstapel
- 400: Laminierstation
- 500: Beschneide-/Vereinzelungsstation
- 600: Nachbearbeitungsstation (z.B. Lasermarkierung, elektronische Markierung etc.)
- 800: Vereinzelungseinrichtung
- 900: Aushärtstation
- 1011: Materialschicht (korrespondierend mit der Trägersubstratschicht 11)
- 1012: Materialschicht (korrespondierend mit der Fotoschicht 12)
- 1050: Materialschicht (korrespondierend mit der Schutzfolie 50)
- 1110, 1120, 1130, 1140, 1150: Materialschicht (korrespondierend mit weiteren Substratschicht4n 110, 120, 130, 140, 150)
- 1200: monolithischer Materialkörper
- 2001-2007: Übergange

## Patentansprüche

1. Verfahren zum Integrieren eines Hologramms in einen Sicherheitsdokumentkörper (1), welcher einen Laminationskörper (2) umfasst, umfassend die Schritte:
Bereitstellen eines Hologrammfilms (10) mit einer Trägersubstratschicht und einer Fotoschicht (12);
Bereitstellen weiterer Substratschichten (110- 150);
Ausführen einer Lamination zum Ausbilden des Laminationskörpers,
wobei der Hologrammfilm (10) gemeinsam mit den weiteren Substratschichten (110-150) zu einem Substratschichtenstapel zusammengetragen wird und gemeinsam mit den weiteren Substratschichten in einem Laminationsverfahren zu dem Laminationskörper (2) zusammengefügt wird, **dadurch gekennzeichnet, dass** unmittelbar auf die Fotoschicht (12) eine aushärtbare Schutzfolie (50) vor Ausführen des Laminationsverfahrens auf den Hologrammfilm (10) aufkaschiert wird.

2. Verfahren nach Anspruch 1, **dadurch gekennzeichnet, dass** der Hologrammfilm (10) vor dem Aufkaschieren der aushärtbaren Schutzfolie (50) belichtet wird.

3. Verfahren nach Anspruch 1 oder 2, **dadurch gekennzeichnet, dass** das Fixieren des Hologramms in dem Holgrammfilm zeitgleich mit dem Aushärten der aufkaschierten Schutzfolie (50) ausgeführt wird.

4. Verfahren nach einem der Ansprüche 1 bis 3, **dadurch gekennzeichnet, dass** die Trägersubstratschicht (11) eine Kunststoffsicht ist, welche auf Basis desselben Polymermaterials hergestellt ist wie mindestens eine der weiteren Substratschichten (110- 150), die an die Trägersubstratschicht (11) angrenzt.

5. Verfahren nach einem der Ansprüche 1 bis 4, **dadurch gekennzeichnet, dass** die aushärtbare Schutzfolie (50) mittels einer Bestrahlung mit elektromagnetischer Strahlung ausgehärtet wird.

6. Verfahren nach einem der Ansprüche 1 bis 5, **dadurch gekennzeichnet, dass** das Aushärten der aushärtbaren Schutzfolie (50) auf der Fotoschicht (12) vor dem Laminieren ausgeführt wird.

## Claims

1. Method for integrating a hologram into a security document body (1) that comprises a laminated body (2), said method comprising:
providing a holographic film (10) having a backing substrate layer and a photo layer (12);
providing additional substrate layers (110-150);
processing a lamination to from the laminated body, in which the holographic film (10) collates together with the additional substrate layers (110- 150) in a substrate layer stack and combines together with the additional substrate layers in a lamination process to from the laminated body (2), **characterized in that** directly onto the photo layer (12) a curable protective sheet (50) is lined, prior to the lamination process, on the holographic film (10).

2. Method according to claim 1, which comprises exposing the holographic film (10) prior to lining the curable protective sheet (50).

3. Method according to claims 1 or 2, which comprises fixing the hologram in the holographic film simultaneously with curing the laminated protective (50) sheet.

4. Method according to claims 1 to 3, wherein the backing substrate layer (11) is a plastic layer formed of the same polymer material as at least one of the additional substrate layers (110- 150) adjoining the backing substrate layer (11).

5. Method according to claims 1 to 4, which comprises curing the curable protective sheet (50) by irradiation with electromagnetic radiation.

6. Method according to claims 1 to 5, wherein the curing the curable protective sheet (50) on the photo layer (12) is performed prior to the laminating.

## Revendications

1. Procédé d'intégration d'un hologramme dans un corps de document de sécurité (1), qui comporte un corps de stratification (2), comportant les étapes :
préparation d'un film d'hologramme (10) avec une couche de substrat porteur et une couche de photographie (12) ;
préparation d'autres couches de substrat (110-150) ;
exécution d'une stratification pour former le corps de stratification,
dans lequel le film d'hologramme (10) est assemblé conjointement avec les autres couches de substrat (110-150) en une pile de couches de substrat et est joint conjointement avec les autres couches de substrat dans un procédé de stratification dans le corps de stratification (2), **caractérisé en ce que** directement sur la couche de photographie (12) une feuille de protection (50) durcissable est contrecollée avant l'exécution du procédé de stratification sur le film d'hologramme (10).

2. Procédé selon la revendication 1, **caractérisé en ce que** le film d'hologramme (10) est exposé avant le contrecollage de la feuille de protection (50) durcissable.

3. Procédé selon la revendication 1 ou 2, **caractérisé en ce que** la fixation de l'hologramme dans le film d'hologramme est exécutée simultanément au durcissement de la feuille de protection (50) contrecollée.

4. Procédé selon l'une quelconque des revendications 1 à 3, **caractérisé en ce que** la couche de substrat porteur (11) est une couche de matière plastique, qui est fabriquée sur la base du même matériau polymère qu'au moins une des autres couches de substrat (110-150) qui sont contiguës à la couche de substrat porteur (11).

5. Procédé selon l'une quelconque des revendications 1 à 4, **caractérisé en ce que** la feuille de protection (50) durcissable est durcie au moyen d'une exposition à un rayonnement électromagnétique.

6. Procédé selon l'une quelconque des revendications 1 à 5, **caractérisé en ce que** le durcissement de la feuille de protection (50) durcissable est exécuté sur la couche de photographie (12) avant la stratification.
